# EUROPEAN PATENT APPLICATION

(11) **EP 4 644 316 A1**
(43) Date of publication of application: **05.11.2025**
(21) Application number: 25171719.5
(22) Date of filing: 22.04.2025
(51) Int. Cl.: C01B 25/45, H01M 4/04, H01M 4/36, H01M 4/58, H01M 4/62

(54) **METHOD OF PREPARING POSITIVE ELECTRODE ACTIVE MATERIAL FOR LITHIUM SECONDARY BATTERY**

(30) Priority: 26.04.2024 KR 20240055885
(71) Applicant: ECOPRO BM CO., LTD., Cheongju-si, Chungcheongbuk-do 28116 (KR)
(72) Inventor: CHUN, Yu Gyeong, 28116 Cheongju-si, Chungcheongbuk-do (KR); KONG, Bo Hyun, 28116 Cheongju-si, Chungcheongbuk-do (KR); KIM, Ji Won, 28116 Cheongju-si, Chungcheongbuk-do (KR); LEE, Joung Hee, 28116 Cheongju-si, Chungcheongbuk-do (KR); LEE, Jeong Mog, 28116 Cheongju-si, Chungcheongbuk-do (KR); KIM, Min Ji, 28116 Cheongju-si, Chungcheongbuk-do (KR); LYU, Dong Hyun, 28116 Cheongju-si, Chungcheongbuk-do (KR)
(74) Representative: BCKIP Part mbB

(57) **Abstract**

The present specification relates to a method of preparing a positive electrode active material for a lithium secondary battery, and more particularly, to a positive electrode active material for a lithium secondary battery with excellent electrical conductivity and energy density, a preparation method thereof, and a positive electrode and a secondary battery including the same.

## Description

### BACKGROUND

### 1. Field of the Invention

The present specification relates to a method of preparing a positive electrode active material for a lithium secondary battery, and more particularly, to an environmentally friendly method of preparing a positive electrode active material for a lithium secondary battery with excellent electrical conductivity and energy density.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

Various materials are used as a positive electrode active material of a lithium secondary battery, and among them, lithium metal phosphate, such as lithium iron phosphate (LiFePO₄), is widely used to manufacture lithium secondary batteries because LiFePO₄ has excellent stability, the ability to withstand many charge/discharge cycles, and relatively low manufacturing cost.

Conventional positive electrode active materials were prepared by synthesizing a precursor first and then adding lithium and sintering it. However, when this method is used, there are problems such as the generation of pollutants such as sulfur oxides (SOₓ) and nitrogen oxides (NOₓ) due to components in the raw materials used for precursor production. Additionally, adding lithium after dehydrating or drying the synthesized precursor is disadvantageous in terms of energy consumption and production yield.

As technology advances and the demand for lithium secondary batteries, particularly for electrical vehicles, grows, the relevant industry is increasingly seeking technology for preparing positive electrode active materials in an environmentally friendly and energy-efficient manner.

### SUMMARY OF THE INVENTION

In the lithium secondary battery market, the growth of lithium secondary batteries for electric vehicles is the driving force, and accordingly, the demand for positive electrode active materials used in the lithium secondary batteries is continuously increasing, and in particular, the demand for increased capacity of positive electrode active materials is gradually increasing.

Also, the market is increasingly demanding positive electrode active materials prepared through more environmentally friendly methods, which requires a fundamental shift in the methods used to produce these materials.

To meet these market demands, the present specification is directed to providing a method of preparing a positive electrode active material without a separate precursor synthesis process.

The present specification is also directed to providing a positive electrode including a positive electrode active material prepared according to the preparation method defined herein.

The present specification is also directed to providing a lithium secondary battery using the positive electrode defined herein.

According to an aspect of the present specification, there is provided a method of preparing a positive electrode active material for a lithium secondary battery, including (a) preparing a slurry including a metal-phosphorus complex by reacting a transition metal raw material and a phosphate-based raw material; (b) obtaining a powder by adding a lithium raw material and a carbon raw material to the slurry and then grinding and drying the mixture; and (c) obtaining a lithium composite compound by heat-treating the powder.

In an embodiment, the transition metal may be Fe or include Fe and at least one selected from the group consisting of Mn, Ni, and Co.

The reaction in step (a) may be performed at 60 to 150 °C.

The lithium raw material in step (b) may be added so that the Li/Metal ratio of the number of lithium atoms (Li) to the total number of metal elements other than lithium (Metal) in the slurry is 0.90 to 1.10.

In another embodiment, the carbon raw material in step (b) may be added in a molar ratio of 0.01 to 0.5 based on the total moles of the lithium composite compound.

In step (b), at least one sub-raw material including an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be further added to the slurry.

In step (b), the grinding may be performed so that the average particle diameter of the solids in the slurry is 1.0 µm or less.

For example, the heat treatment in step (c) may be performed under conditions of 700 to 950 °C.

According to another aspect of the present specification, there is provided a positive electrode active material for a lithium secondary battery, which is prepared according to the above-described method, the positive electrode active material including a lithium composite compound capable of lithium intercalation/deintercalation, wherein the lithium composite compound includes a plurality of particulate materials, at least some of the particulate materials have an amorphous carbon coating layer with a thickness of 1 to 500 nm formed on at least a portion of their surfaces, and the lithium composite compound is represented by Chemical Formula 1 below:

[Chemical Formula 1] LiₚFe_{1-x-y}MₓA_{y}A'_{z}P_{1-z}O_{w}

where M is at least one selected from the group consisting of Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, A' is at least one selected from the group consisting of C, Si, S, N, B, F, Cl, and I, and 0.5≤p≤1.5, 0≤x<1, 0≤y<1, 0≤z<1, and 0<w≤4.

According to still another aspect of the present specification, there is provided a positive electrode including the positive electrode active material.

According to yet another aspect of the present specification, there is provided a lithium secondary battery using the positive electrode.

### DETAILED DESCRIPTION OF EXEMPLARY EMBODIMENTS

For a better understanding of the present specification, certain terms are defined herein for convenience. Unless otherwise defined herein, scientific and technical terms used herein will have meanings commonly understood by those skilled in the art. In addition, unless otherwise specified in the context, the singular should be understood to include the plural, and the plural should be understood to include the singular.

Hereinafter, a method of preparing a positive electrode active material for a lithium secondary battery, a positive electrode including the positive electrode active material prepared thereby, and a lithium secondary battery using the positive electrode, according to the present specification, will be described in more detail.

### Method of preparing positive electrode active material for lithium secondary battery

According to an aspect of the present specification, a method of preparing a positive electrode active material for a lithium secondary battery may include (a) preparing a slurry including a metal-phosphorus complex by reacting a transition metal raw material and a phosphate-based raw material; (b) obtaining a powder by adding a lithium raw material and a carbon raw material to the slurry and then grinding and drying the mixture; and (c) obtaining a lithium composite compound by heat-treating the powder.

In a conventional method of producing a lithium phosphate composite compound, sulfates or nitrates were used as raw materials to prepare phosphate-based precursors, and lithium was subsequently added and sintered to prepare a positive electrode active material.

However, in these methods, energy and yield losses were caused during the dehydration and drying processes in the preparation of the precursor. Additionally, harmful substances such as SOₓ and NOₓ were generated.

On the other hand, the preparation method according to an aspect of the present specification can prepare a positive electrode active material with equivalent or superior performance while being an environmentally friendly method by not generating harmful substances such as SOₓ and NOₓ and excluding unnecessary dehydration and drying processes.

Step (a) is for forming a metal-phosphorus complex by reacting a transition metal raw material and a phosphate-based raw material. The transition metal raw material and phosphate-based raw material may each be one or two or more types.

The transition metal raw material refers to a material containing a transition metal. In an embodiment, the transition metal may be Fe or include Fe and at least one selected from the group consisting of Mn, Ni, and Co.

For example, when the transition metal is Fe, the transition metal raw material may be at least one selected from the group consisting of Fe metal, FeOOH, Fe₂O₃, and Fe₃O₄.

When the transition metal further includes a transition metal M in addition to Fe, the Fe transition metal raw material and at least one selected from the group consisting of MSO₄, HMPO₄, MPO₄, M₃(PO₄)₂, (CH₃COO)₂M, M(NO₃)₂, MCO₃ M₂CO₃, and MO₂ may be included as the transition metals.

In addition, the phosphate-based raw material includes anions, salts, functional groups, or esters derived from phosphoric acid. For example, the phosphate-based raw material may be at least one selected from the group consisting of H₃PO₄, Li₃PO₄, NH₄H₂PO₄, and (NH₄)₂HPO₄.

The ratio of the transition metal raw material and the phosphate-based raw material may be adjusted so that the phosphorus element is present in an amount of 0.90 to 1.10 mol based on 1 mol of the transition metal. For example, the phosphorus element may be present in an amount of 0.90 mol, 0.91 mol, 0.92 mol, 0.93 mol, 0.94 mol, 0.95 mol, 0.96 mol, 0.97 mol, 0.98 mol, 0.99 mol, 1.00 mol, 1.01 mol, 1.02 mol, 1.03 mol, 1.04 mol, 1.05 mol, 1.06 mol, 1.07 mol, 1.08 mol, 1.09 mol, 1.10 mol, or within a range between any two of these values.

The reaction in step (a) may be performed at 60 to 150 °C, for example, 60 °C, 62.5 °C, 65 °C, 67.5 °C, 70 °C, 72.5 °C, 75 °C, 77.5 °C, 80 °C, 82.5 °C, 85 °C, 87.5 °C, 90 °C, 92.5 °C, 95 °C, 97.5 °C, 100 °C, 102.5 °C, 105 °C, 107.5 °C, 110 °C, 112.5 °C, 115 °C, 117.5 °C, 120 °C, 122.5 °C, 125 °C, 127.5 °C, 130 °C, 132.5 °C, 135 °C, 137.5 °C, 140 °C, 142.5 °C, 145 °C, 147.5 °C, 150 °C, or within a range between any two of these values.

The reaction may be performed while stirring the slurry for 4 to 48 hours, for example, 4 hours, 6 hours, 8 hours, 10 hours, 12 hours, 14 hours, 16 hours, 18 hours, 20 hours, 22 hours, 24 hours, 26 hours, 28 hours, 30 hours, 32 hours, 34 hours, 36 hours, 38 hours, 40 hours, 42 hours, 44 hours, 46 hours, 48 hours, or within a range between any two of these values.

In step (a), transition metal ions and phosphate ions may react to form a metal-phosphorus complex. For example, iron ions (Fe³⁺) and phosphate ions (PO₄³⁻) may react to form various metal-phosphorus complexes. These metal complexes may include FePO₄·nH₂O (0≤n≤9), anhydrous FePO₄, Fe₃(PO₄)₂, Fe₂(HPO₄)₃, etc. The metal-phosphorus complex may be formed in a precipitated state within the slurry. Among the metal-phosphorus complexes, FePO₄·2H₂O may account for the highest proportion.

Meanwhile, step (b) may be for adding lithium and carbon raw materials to the slurry containing the metal-phosphorus complex without separate dehydration and drying processes.

In conventional methods of preparing lithium iron phosphate compounds using precursors, simply omitting dehydration and drying processes may result in impurities, such as sulfur (S)- or nitrogen (N)-based compounds, remaining in the slurry. These impurities not only generate harmful substances such as SOₓ, NOₓ, etc. during sintering, but also hinder the carbonization of the carbon raw material and the growth of olivine crystals. In addition, when substances derived from these impurities remain in the positive electrode active material, gas may be generated within the battery and reduce its stability.

The lithium raw material may be for introducing lithium so that the metal-phosphorus complex serves as a lithium positive electrode active material.

In step (b), the lithium raw material may be added so that the Li/Metal ratio of the number of lithium atoms (Li) to the total number of metal elements other than lithium (Metal) in the slurry is 0.90 to 1.20. For example, the Li/Metal ratio may be 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, or within a range between any two of these values. Alternatively, depending on the purpose, the Li/Metal ratio may be adjusted to 0.5 to 1.5, but is not limited thereto.

Meanwhile, the carbon raw material added in step (b) may serve to form a carbon coating that enhances the conductivity of the positive electrode active material. When the thickness of the carbon coating layer is minimized while increasing its uniformity, reduced flowability caused by amorphous carbon may be mitigated, thereby improving the conductivity of the positive electrode active material.

For example, a lithium iron phosphate compound, which is an olivine-based positive electrode material, exhibits relatively low electrical conductivity due to the strong covalent bonds in PO₄³⁻. Additionally, it is known that Li⁺ diffuses one-dimensionally in the crystal structure, resulting in low ionic conductivity.

To overcome these limitations, conventional approaches have proposed technologies of forming a carbon coating to improve conductivity and forming nanoparticles to enhance Li⁺ diffusion.

However, in conventional positive electrode active materials, the coated carbon is present in an amorphous phase, which may reduce the density of the positive electrode active material.

Additionally, conventional nanoparticulate materials grow into angular particles during sintering processes due to aggregation.

As a result, the reduced flowability caused by amorphous carbon and the angular particles decrease the density of the positive electrode active material, which may ultimately reduce the energy density of the final product.

On the other hand, the carbon coating layer formed by the above method may have a uniform and thin thickness. In addition, the carbon raw material may induce the lithium composite compound to grow into a spherical shape.

The carbon raw material may be a compound with a carbon (C) proportion of 30 to 60 wt% in its molecular structure. For example, the proportion of carbon may be 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, or within a range between any two of these values.

When a carbon raw material with a carbon (C) proportion that satisfies the above range is used, products with superior yield and uniformity in carbon coating may be manufactured even when using the same amount of the compound.

The carbon raw material may be, for example, sucrose, glucose, polyvinyl alcohol (PVA), polyvinyl pyrrolidone (PVP), colloidal carbon, citric acid, tartaric acid, glycolic acid, polyacrylic acid, adipic acid, glycine, aminobenzoic acid, etc., but is not limited thereto.

By adjusting the properties of the carbon raw material, the characteristics of the carbon coating layer may be controlled.

For example, minimizing the thickness of the carbon coating layer in the positive electrode active material while increasing its uniformity may minimize the reduction in flowability caused by amorphous carbon and improve the conductivity of the positive electrode active material.

In an embodiment, the carbon raw material in step (b) may be added in a molar ratio of 0.01 to 0.5 based on the total moles of the lithium composite compound. For example, it may be added in an amount of 0.01 mol, 0.05 mol, 0.1 mol, 0.15 mol, 0.2 mol, 0.25 mol, 0.3 mol, 0.35 mol, 0.4 mol, 0.45 mol, 0.5 mol, or within a range between any two of these values.

In another embodiment, the carbon raw material may be added so that the C/Metal ratio of the number of carbon atoms (C) to the total number of metal elements other than lithium (Metal) in the slurry is 0.30 to 0.70. For example, the ratio may be 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, or within a range between any two of these values.

In step (b), at least one sub-raw material including an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr may be further added to the slurry.

The sub-raw material may be added to dope the lithium composite compound with a heterogeneous element. The doped heterogeneous element may improve the stability or conductivity of the positive electrode active material.

Additionally, step (b) is for grinding the solids in the slurry. The slurry may contain lithium raw materials, the metal-phosphorus complex, carbon raw materials, etc.

When grinding or drying a slurry containing impurities, residual impurities may hinder the carbonization of the carbon raw material, which forms the coating layer, and the growth of olivine crystals. When using a slurry containing impurities after washing it, it may be difficult to obtain a uniform carbon coating. However, since the slurry does not include impurities containing sulfur (S) and nitrogen (N), the solids may be directly ground and used without a separate washing process, and the carbon raw material may be uniformly applied during sintering.

In step (b), the slurry may be ground so that the solids in the slurry have an average particle diameter (D50) of 1.0 µm or less. For example, the D50 may be 1.0 µm, 0.9 µm, 0.8 µm, 0.7 µm, 0.6 µm, 0.5 µm, 0.4 µm, 0.3 µm, 0.2 µm, 0.1 µm, or within a range between any two of these values. In another example, the average particle diameter (D50) of the ground particles in step (b) may range from 0.5 to 0.7 µm. For example, the D50 may be 0.5 µm, 0.51 µm, 0.52 µm, 0.53 µm, 0.54 µm, 0.55 µm, 0.56 µm, 0.57 µm, 0.58 µm, 0.59 µm, 0.6 µm, 0.61 µm, 0.62 µm, 0.63 µm, 0.64 µm, 0.65 µm, 0.66 µm, 0.67 µm, 0.68 µm, 0.69 µm, 0.7 µm, or within a range between any two of these values.

The particles ground to have an average particle diameter within the above range may be appropriately aggregated due to surface energy. As a result, the density characteristics of the positive electrode active material may be improved.

In an example, step (b) may be performed in a milling machine including beads with a size of 0.1 to 1.5 mm. For example, the bead size may be 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, or within a range between any two of these values. The bead size may refer to the diameter of the beads. When the beads are not spherical, the diameter may refer to the major axis length.

The milling machine may include beads in a volume range of 30 to 50%. For example, the bead volume may be 30%, 32.5%, 35%, 37.5%, 40%, 42.5%, 45%, 47.5%, 50%, or within a range between any two of these values.

Additionally, the slurry input into the milling machine may have a solid content of 20 to 50% by weight. For example, the solid content may be 20%, 22.5%, 25%, 27.5%, 30%, 32.5%, 35%, 37.5%, 40%, 42.5%, 45%, 47.5%, 50%, or within a range between any two of these values.

For grinding the particles, dry or wet dispersion mills, such as ball mills, bead mills (with beads commonly used for grinding metallic raw materials, such as Al, Fe, or Zr beads), vibratory mills, attritor mills, air jet mills, disc mills, and air classifier mills, may be used.

In an example, the milling machine may be a nano mill including Zr beads.

In step (b), after grinding, the slurry may be dried to obtain a powder. For example, the slurry may be dried through spray drying. Thus, the powder in step (c) may be the spray-dried product of the slurry ground in step (b).

Spray drying, which is an example of the drying, may be performed in a spray dryer, and the spray dryer is not particularly limited as long as it is a spray drying device capable of producing dried particles having a nearly spherical shape by spray drying the slurry including the pulverized particles, and the spray dryer may be an ultrasonic sprayer, a hydraulic spray nozzle sprayer, a dual fluid spray nozzle sprayer, an ultrasonic nozzle sprayer, a filter expansion aerosol generator (FEAG), or a disk type aerosol generator.

The spray dryer may include a spray nozzle and a drying chamber, and the slurry is atomized into droplets of a predetermined size through the spray nozzle and sprayed into the drying chamber in which gas with a relatively high temperature flows.

The raw material in the droplets sprayed into the drying chamber may be dried into particles with near-spherical shapes under the temperature in the drying chamber.

When the slurry contains a specific carbon raw material, unnecessary aggregation of the particles may be suppressed during spray drying. As a result, particles with near-spherical shapes may be obtained.

In an example, moisture loss during drying may reduce particle density and form pores. This may weaken particle strength and reduce the stability of the positive electrode active material.

Here, adjusting the slurry viscosity after completing the grinding in step (b) may shorten the condensation time during drying and minimize density loss caused by moisture loss during drying.

However, when the viscosity of the slurry is excessively high, the flowability may be reduced during drying, resulting in insufficient process efficiency, and it may be difficult to obtain spherical particles.

One method of controlling slurry viscosity involves adding a binder.

The subsequent step (c) may be for heat-treating the powder dried in step (b) to form the lithium composite compound.

During the heat treatment in step (c), the carbon raw material may undergo carbonization to form a carbon coating layer. Therefore, the carbon raw material needs to undergo carbonization within the heat treatment temperature of step (c). When non-carbonized carbon-based compounds remain in the positive electrode active material, it may lead to insufficient conductivity improvement or unexpected side effects.

The heat treatment in step (c) may be performed in an inert atmosphere at a maximum temperature of 700 to 950 °C for 5 to 15 hours. The maximum temperature may vary depending on the composition of the target positive electrode active material.

For example, the heat treatment may be performed at a maximum temperature of 700 °C, 725 °C, 750 °C, 775 °C, 800 °C, 825 °C, 850 °C, 875 °C, 900 °C, 925 °C, 950 °C, or within a range between any two of these values. The heat treatment may be performed while maintaining the maximum temperature for 5 hours, 5.5 hours, 6 hours, 6.5 hours, 7 hours, 7.5 hours, 8 hours, 8.5 hours, 9 hours, 9.5 hours, 10 hours, 10.5 hours, 11 hours, 11.5 hours, 12 hours, 12.5 hours, 13 hours, 13.5 hours, 14 hours, 14.5 hours, 15 hours, or within a range between any two of these values, but is not limited thereto.

When the heat treatment is performed at a temperature within the above range, the density of the lithium composite compound may be excellent.

On the other hand, when the heat treatment temperature in step (c) is too low, the sintering of the precursor may be insufficient, resulting in insufficient crystal growth of the lithium composite compound or difficulty in forming a carbon coating layer. Consequently, the density of the lithium composite compound may decrease.

On the other hand, when the heat treatment temperature in step (c) is excessively high, thermal decomposition of the lithium composite compound may occur, thereby reducing particle strength or causing particle fragmentation.

The heat treatment may be performed by raising the temperature at a rate of 1 to 10 °C per minute until the maximum temperature is reached. For example, the rate may be 1 °C, 1.5 °C, 2 °C, 2.5 °C, 3°C, 3.5 °C, 4 °C, 4.5 °C, 5 °C, 5.5 °C, 6 °C, 6.5 °C, 7°C, 7.5 °C, 8°C, 8.5 °C, 9 °C, 9.5 °C, 10 °C per minute, or within a range between any two of these values.

The inert atmosphere may be formed by replacing air with at least one inert gas selected from the group consisting of N₂, Ar, He, Rn, Ne, and Xe, but is not limited thereto.

The majority of the metal-phosphorus complex formed in step (a) may be present in a hydrate form. During sintering in step (c), the crystallization water in the metal-phosphorus complex in a hydrate form is removed, and the crystal may be re-established. This process releases moisture and consumes thermal energy. As a result, carbonization of the carbon raw material occurs at relatively high temperatures, and the conductivity may be improved through the formation of a uniform carbon coating.

After the heat treatment in step (c), cooling may be performed under an inert atmosphere maintained at a temperature of 150 °C or below. For example, the heat-treated lithium composite compound may be obtained through furnace cooling.

Additionally, disintegration, distribution, and/or washing processes may be performed on the lithium composite compound before or after step (c).

### Positive electrode active material for lithium secondary battery

According to another aspect of the present specification, a positive electrode active material for a lithium secondary battery is a positive electrode active material prepared according to the above-described method and includes a lithium composite compound capable of lithium intercalation/deintercalation, wherein the lithium composite compound includes a plurality of particulate materials, at least some of the particulate materials have an amorphous carbon coating layer with a thickness of 1 to 500 nm formed on at least a portion of their surfaces, and the lithium composite compound is represented by Chemical Formula 1 below:

[Chemical Formula 1] LiₚFe_{1-x-y}MₓA_{y}A'_{z}P_{1-z}O_{w}

where M is at least one selected from the group consisting of Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, A' is at least one selected from the group consisting of C, Si, S, N, B, F, Cl, and I, and 0.5≤p≤1.5, 0≤x<1, 0≤y<1, 0≤z<1, and 0<w≤4.

The positive electrode active material may include particulate materials composed of a lithium composite compound capable of lithium intercalation/deintercalation.

**In** an embodiment, the particulate materials may be present without forming any aggregates. The particulate materials may have a spherical shape. Since the lithium composite compound is a particulate material with a smooth surface, the positive electrode active material may achieve excellent compaction density.

The average particle diameter of the particulate materials (which may be the average major axis length of the particulate materials) may range from 0.01 to 5 µm, thereby enabling the positive electrode manufactured using the positive electrode active material according to various embodiments to achieve optimal density.

In another example, the particulate materials may be present as primary particles, which may aggregate to form secondary particles. Here, the primary particles refer to individual grains or crystallites, and the secondary particles refer to aggregates formed by aggregation of primary particles. In this case, the primary particles may have a spherical shape. Since the lithium composite compound is composed of particles with a smooth surface, the positive electrode active material may achieve excellent compaction density.

A void and/or a grain boundary may be present between the primary particles constituting the secondary particles. The primary particles may be spaced apart from neighboring primary particles in the secondary particles to form internal voids. **In** addition, the primary particles may form a surface present in the secondary particles by coming into contact with internal voids, without forming a grain boundary by coming into contact with neighboring primary particles. Meanwhile, the surface of the primary particles, present on the outermost surface of the secondary particles and exposed to the external air, forms the surface of the secondary particles.

The average particle diameter of the primary particles (which may be the average major axis length of the primary particles) may range from 0.1 to 5 µm, thereby enabling the positive electrode manufactured using the positive electrode active material according to various embodiments to achieve optimal density. The average particle diameter of secondary particles in which a plurality of primary particles are aggregated may vary depending on the number of aggregated primary particles but is generally in the range of 30.0 to 40.0 µm.

In another embodiment, the positive electrode active material may include a lithium composite compound that is present in a single-crystal form with an average particle diameter of 0.1 µm or more.

Meanwhile, the positive electrode active material may include a coating layer that covers at least a portion of the surface of the particulate materials (such as the interface between the particulate materials) and/or aggregates formed by aggregation of the particulate materials.

Here, the coating layer may include a carbon layer and/or an oxide layer to improve the stability or conductivity of the particulate material.

For example, the coating layer may be present to cover at least a portion of the exposed surfaces of the particulate materials. When the particulate materials aggregate to form secondary particles, the coating layer may be present to cover at least a portion of the exposed surfaces of the primary particles at the outermost surface of the secondary particles.

Accordingly, the coating layer may present as a layer that continuously or discontinuously coats the surface of the particulate materials and/or the secondary particles formed by aggregation of the particulate materials. When the coating layer is discontinuous, it may be present in an island form.

When the particulate materials form an aggregate, the coating layer may be present not only at the interface between the particulate materials and on at least a portion of the surface of secondary particles, but also in the internal voids formed inside the secondary particles.

The coating layer present as such may improve the electrochemical properties and stability of the positive electrode active material.

The coating layer may be present as a solid solution that does not form a boundary with the particulate materials and/or the secondary particles formed by aggregation of the particulate materials, but is not necessarily present in this form.

Additionally, the amorphous carbon coating layer formed on at least some of the surfaces of the particulate materials may have a thickness of 1 to 500 nm. For example, the thickness may be 1 nm, 2.5 nm, 5 nm, 10 nm, 15 nm, 20 nm, 25 nm, 50 nm, 75 nm, 100 nm, 125 nm, 150 nm, 175 nm, 200 nm, 225 nm, 250 nm, 300 nm, 350 nm, 400 nm, 450 nm, 500 nm, or within a range between any two of these values.

The thickness of the carbon coating layer may be adjusted depending on the balance of the flowability and conductivity of the lithium composite compound.

In particular, since the carbon coating layer exhibits a small thickness deviation, the positive electrode active material may achieve balanced flowability and conductivity, which are complementary properties.

To measure the thickness of the carbon coating layer, various known methods may be used. For example, the thickness may be measured using transmission electron microscopy (TEM) or scanning electron microscopy (SEM) images, or confirmed from line scanning results of carbon in a specific direction through energy-dispersive X-ray (EDX) analysis. This thickness may be an average value of measurements taken at least three times.

Furthermore, the carbon coating layer is uniformly formed on the surface of the particulate lithium composite compound, resulting in a smooth surface texture. As a result, the positive electrode active material may have a high compaction density.

Olivine-type positive electrode materials are known to exhibit low electrical conductivity due to the strong covalent bonds in PO₄³⁻. Additionally, the ionic conductivity is low due to Li⁺ ions diffusing one-dimensionally in the crystal structure. To overcome these limitations, it has been proposed to form a carbon coating layer and prepare nano-sized positive electrode active materials.

However, amorphous carbon coating layers decrease the density of the positive electrode active material. During sintering, nanoparticles aggregate and form angular particles, which reduce both flowability and the density of the positive electrode active material. As a result, the energy density per unit volume may ultimately be reduced.

On the other hand, the particulate materials including the lithium composite compound according to the present specification include a uniform carbon coating layer. In addition, under the conditions for forming this carbon coating layer, the lithium composite compound may grow into spherical particles, thereby minimizing density reduction.

Additionally, the lithium composite compound may be represented by Chemical Formula 1 below.

[Chemical Formula 1] LiₚFe_{1-x-y}MₓA_{y}A'_{z}P_{1-z}O_{w}

where M is at least one selected from the group consisting of Mn, Ni, and Co, A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr, A' is at least one selected from the group consisting of C, Si, S, N, B, F, Cl, and I, and 0.5≤p≤1.5, 0≤x<1, 0≤y<1, 0≤z<1, and 0<w≤4.

Chemical Formula 1 represents a lithium composite compound capable of lithium intercalation/deintercalation, and may include lithium, metals, and phosphates.

For example, p may be 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, or within a range between any two of these values, but is not limited thereto.

Additionally, x, y, and z may each independently be 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 0.99, or within a range between any two of these values, but are not limited thereto.

In addition, w may be 0.01, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.25, 2.5, 2.75, 3, 3.25, 3.5, 3.75, 4, or within a range between any two of these values, but is not limited thereto.

In other words, LiFePO₄, LiFe_{0.8}Mn_{0.2}PO₄, LiFe_{0.5}Mn_{0.5}PO₄, etc. may be represented by Chemical Formula 1. Furthermore, the lithium composite compound may further include a dopant. The dopant may be represented by A and/or A'.

In addition, on at least some of the surfaces of the particulate materials, a compound represented by Chemical Formula 2 below may be present.

[Chemical Formula 2] LiₐM'_{b}O_{c}

where M' is at least one selected from the group consisting of Ag, Al, As, Au, Ba, Be, Bi, Ca, Cd, Ce, Co, Cr, Cu, Fe, Ga, Hf, In, K, La, Mg, Mn, Mo, Na, Nb, Nd, Ni, Os, Pd, Pr, Pt, Rh, Ru, Sm, Sn, Sr, Ta, Ti, V, W, Y, Zn, and Zr, and 0≤a≤10, 0<b≤8, and 2≤c≤13.

The compound represented by Chemical Formula 2 may be present separately from the amorphous carbon coating layer or as a discontinuous phase within the continuous phase of the amorphous carbon coating layer. In an example, the compound represented by Chemical Formula 2 may form a coating layer. The coating layer may continuously or discontinuously coat at least some of the surfaces of the particulate materials, and when the coating layer is discontinuous, it may be present in an island form. Additionally, the coating layer may be present as a solid solution that does not form a boundary with the particulate materials, but is not necessarily present in this form.

Even when a coating layer of the compound is present on at least some of the surfaces of the particulate materials, it is preferable for the particulate materials to maintain a spherical shape.

### Lithium secondary battery

According to still another aspect of the present specification, a positive electrode including a positive electrode current collector and a positive electrode active material layer formed on the positive electrode current collector may be provided. The positive electrode active material layer may include the positive electrode active material prepared by the method according to various embodiments described above.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material is included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present specification is not limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

According to still another aspect of the present specification, an electrochemical device including the above-described positive electrode may be provided. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte.

The lithium secondary battery may also be provided as an anode-free secondary battery. Since the positive electrode is the same as described above, detailed description of the positive electrode will be omitted for convenience, and other components which have not been described above will be described in detail below. Additionally, descriptions related to the negative electrode hereafter assume the presence of a negative electrode in the lithium secondary battery.

Meanwhile, in the lithium secondary battery, the separator may be replaced with a solid electrolyte. In this case, an electrode slurry composition including an additional solid electrolyte may be used during the manufacture of the positive and negative electrodes.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. **In** addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of a high melting point glass fiber or a polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used in the lithium secondary battery may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present specification is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery, and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0 M. When the concentration of the lithium salt is within this range, the electrolyte has appropriate conductivity and viscosity, exhibiting excellent electrolyte performance, and thus lithium ions may move effectively.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

The electrolyte may include a solid electrolyte such as a solid polymer electrolyte, a gel-type polymer electrolyte, or a solid inorganic electrolyte.

Regarding a lithium secondary battery including a solid electrolyte, the above-described separator may be omitted. However, since it is difficult for the electrolyte to penetrate into the positive electrode and the negative electrode, the positive electrode and the negative electrode may be formed by mixing a solid electrolyte.

The solid polymer electrolyte or the gel-type polymer electrolyte may be a salt of metal ions of Group 1 or Group 2 in the periodic table used in secondary batteries complexed with a polymer resin. For example, a polymer resin may be added to a solvated lithium salt.

The salt of metal ions may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂.

The polymer resin may be, for example, a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphate ester polymer, polyagitation lysine, polyester sulfide, polyvinyl alcohol, polyvinylidene fluoride, a polymer containing an ionic dissociation group, a branched copolymer in which an amorphous polymer such as polymethyl methacrylate (PMMA), polycarbonate, polysiloxane (PDMS), or phosphazene is copolymerized on a polyethylene oxide (PEO) main chain as a comonomer, a comb-like polymer resin and a cross-linked polymer resin.

Generally, as the solid inorganic electrolyte, a sulfide-based solid electrolyte and an oxide-based solid electrolyte may be used.

The sulfide-based solid electrolyte may be a material that includes sulfur (S) and has the conductivity of metal ions of Group 1 or Group 2 in the periodic table used in secondary batteries. For example, it may be Li-P-S-based glass or an Li-P-S-based glass ceramic, which has lithium ion conductivity.

An example of the sulfide-based solid electrolyte may be at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂OP₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂, and Li₂S-GeS₂-ZnS.

The oxide-based solid electrolyte may be a material that includes oxygen (O) and has the conductivity of metal ions of Group 1 or Group 2 in the periodic table used in secondary batteries. For example, it may be at least one selected from the group consisting of LLTO-based compounds, Li₆La₂CaTa₂O₁₂, Li₆La₂ACaNb₂O₁₂, Li₆La₂ASrNb₂O₁₂, LiₐNd₃TeSbO₁₂, Li₃BO_{2.5}N_{0.5}, Li₉SiAlO₈, LAGP-based compounds, LATP-based compounds, LISICON-based compounds, LIPON-based compounds, perovskite-based compounds, NASICO-based compounds, and LLZO-based compounds.

Since the lithium secondary battery including the positive electrode active material stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present specification, a battery module including the lithium secondary battery as a unit cell and/or a battery pack including the same may be provided.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the aforementioned descriptions will be explained in more detail through examples. However, these examples are only for illustrative purposes and should not be construed as limiting the scope of the present specification.

### Preparation Example 1. Preparation of positive electrode active material

### (1) Example 1

FeOOH and 85 wt% of H₃PO₄ were mixed in a reactor so that the molar ratio of Fe and P was 1:1.05. Distilled water was added to the mixture to adjust the solid concentration of the reaction mixture in the slurry to 40 wt%. Afterward, the mixture was stirred at 80 °C for 24 hours to obtain a slurry containing an Fe-P complex.

After adding Li₂CO₃, as a lithium raw material, to the slurry so that the molar ratio of Fe and Li was 1:1.01, sucrose, as a carbon raw material, was added so that the molar ratio of Fe and C was 1:0.7. After filling a nano mill with Φ0.5 mm zirconia balls occupying 40% of the internal volume of the nano mill, the slurry was ground until the D50 of the slurry became 0.5 to 0.7 µm. The ground slurry was dried using a spray dryer (DJE003R from Dongjin Technology Institute).

The dried slurry was heat-treated in a sintering furnace having a N₂ atmosphere for 8 hours by raising the temperature of the sintering furnace to 850 °C at a rate of 2 °C/min and maintaining it. Furnace-cooling and classification were performed to obtain a positive electrode active material including lithium iron phosphate.

### (2) Comparative Example 1

FeOOH, 85 wt% of H₃PO₄, and Li₂CO₃ were mixed in a reactor so that the molar ratio of Fe, P and Li was 1:1.05:1.01. The mixture was stirred at 80 °C for 24 hours to obtain a slurry.

Sucrose, as a carbon raw material, was added to the slurry so that the atomic ratio of Fe and C was 1:0.7. After filling a nano mill with Φ0.5 mm zirconia balls occupying 40% of the internal volume of the nano mill, the slurry was ground until the D50 of the slurry became 0.5 to 0.7 µm. The ground slurry was dried using a spray dryer.

The dried slurry was heat-treated in a sintering furnace having a N₂ atmosphere for 8 hours by raising the temperature of the sintering furnace to 850 °C at a rate of 2 °C/min and maintaining it. Furnace-cooling and classification were performed to obtain a positive electrode active material including lithium iron phosphate.

### (3) Comparative Example 2

A positive electrode active material was prepared in the same manner as in Comparative Example 1, except that oxalic acid was used as the carbon raw material during slurry preparation.

### (4) Comparative Example 3

A positive electrode active material was prepared in the same manner as in Comparative Example 1, except that Li₂CO₃, as a lithium raw material, was dissolved in distilled water and added dropwise during slurry preparation.

### Preparation Example 2. Manufacture of lithium secondary battery

A positive electrode slurry was prepared by dispersing 94 wt% of each positive electrode active material prepared according to Preparation Example 1, 3 wt% of artificial graphite, and 3 wt% of PVDF binder in 3.5 g of N-methyl-2-pyrrolidone (NMP). The positive electrode slurry was applied onto a 20 µm-thick aluminum thin film as a positive electrode current collector, dried, and roll-pressed to manufacture a positive electrode.

A coin cell was manufactured using a lithium foil as a counter electrode to the positive electrode, a porous polyethylene membrane (Celgard 2300, thickness: 25 µm) as a separator, and a liquid electrolyte in which LiPF₆ was dissolved at a concentration of 1.15 M in a mixed solvent of ethylene carbonate and ethyl methyl carbonate at a volume ratio of 3:7, according to a commonly known coin cell manufacturing procedure.

### Experimental Example 1. Evaluation of positive electrode active material properties

For the coin cells manufactured in Preparation Example 2, charge/discharge experiments were conducted using an electrochemical analyzer (Toscat-3100 from TOYO SYSTEM CO., LTD.) at 25 °C, a voltage range of 2.0 V to 3.65 V, and a discharge rate of 0.1 to 5.0 C to measure the initial charge capacity and the initial discharge capacity. After XRD measurements, Rietveld analysis was conducted to determine the contents of FeP₂O₇ and LiFePO₄. The analysis results are shown in Table 1 below.

**[Table 1]**

| Classification | 0.1 C initial charge (mAh/g) | 0.1 C initial discharge (mAh/g) | Carbon content (wt%) | FeP₂O₇ content (wt%) | LiFePO₄ content (wt%) |
|---|---|---|---|---|---|
| Example 1 | 163.46 | 161.79 | 2.30 | 1.03 | 98.97 |
| Comparative Example 1 | 155.12 | 150.16 | 2.24 | 6.05 | 93.95 |
| Comparative Example 2 | 148.20 | 145.10 | 0.77 | 9.11 | 90.89 |
| Comparative Example 3 | 155.61 | 150.88 | 2.32 | 7.54 | 92.46 |

Referring to Table 1, the crystal structure and chemical formula of the Fe-P complex formed can vary depending on the sequence in which the raw materials are added. As a result, differences in FeP₂O₇ impurity content are observed in the prepared positive electrode active materials.

While the exact mechanism remains unclear, the reactivity of the Fe-P complex with lithium may be affected by its crystal structure, potentially resulting in unreacted FeP₂O₇ impurities that do not react with Li.

When oxalic acid was used as the carbon raw material, the low carbon yield during carbonization led to an insufficient coating layer, which in turn degraded performance.

According to the present specification, harmful substances are not generated during the sintering of raw materials, making the process more environmentally friendly.

Additionally, unnecessary dehydration and drying processes are excluded during the preparation of the positive electrode active material, thereby enabling a more economical and efficient preparation process for the positive electrode active material.

In addition to the above-described effects, specific effects of the present specification are described while explaining specific details for the present specification above.

Although embodiments of the present specification have been described above, those skilled in the art can make various modifications and changes to the present specification by adding, changing, or deleting components without departing from the spirit of the present specification as set forth in the claims, which will be included within the scope of rights of the present specification.

## Claims

1. A method of preparing a positive electrode active material for a lithium secondary battery, comprising:
(a) preparing a slurry including a metal-phosphorus complex by reacting a transition metal raw material and a phosphate-based raw material;
(b) obtaining a powder by adding a lithium raw material and a carbon raw material to the slurry and then grinding and drying the mixture; and
(c) obtaining a lithium composite compound by heat-treating the powder.

2. The method of claim 1, wherein the transition metal is Fe or includes Fe and at least one selected from the group consisting of Mn, Ni, and Co.

3. The method of claim 1 or claim 2, wherein the reaction in step (a) is performed at 60 to 150 °C.

4. The method of any one of the preceding claims, wherein the lithium raw material in step (b) is added so that the Li/Metal ratio of the number of lithium atoms (Li) to the total number of metal elements other than lithium (Metal) in the slurry is 0.90 to 1.10.

5. The method of any one of the preceding claims, wherein the carbon raw material in step (b) is added in a molar ratio of 0.01 to 0.5 based on the total moles of the lithium composite compound.

6. The method of any one of the preceding claims, wherein in step (b), at least one sub-raw material including an element selected from Ag, Al, As, Au, B, Ba, Be, Bi, Ca, Cd, Ce, Co, Cr, Cu, F, Fe, Ga, Hf, I, In, K, La, Mg, Mo, N, Na, Nb, Nd, Ni, Os, Pd, Pr, Pt, Rh, Ru, Si, Sm, Sn, Sr, Ta, Ti, V, W, Y, Zn, and Zr is further added to the slurry.

7. The method of any one of the preceding claims, wherein in step (b), the grinding is performed so that the average particle diameter of the solids in the slurry is 1.0 µm or less.

8. The method of any one of the preceding claims, wherein the heat treatment in step (c) is performed under conditions of 750 to 950 °C.

9. A positive electrode active material for a lithium secondary battery prepared according to the method of any one of the preceding claims, the positive electrode active material comprising a lithium composite compound capable of lithium intercalation/deintercalation,
wherein the lithium composite compound includes a plurality of particulate materials,
at least some of the particulate materials have an amorphous carbon coating layer with a thickness of 1 to 500 nm formed on at least a portion of their surfaces, and
the lithium composite compound is represented by Chemical Formula 1 below:
[Chemical Formula 1] LiₚFe_{1-x-y}MₓA_{y}A'_{z}P_{1-z}O_{w}
where
M is at least one selected from the group consisting of Mn, Ni, and Co,
A is at least one selected from the group consisting of Ag, Al, As, Au, Ba, Be, Bi, Ca, Cd, Ce, Cr, Cu, Ga, Hf, In, K, La, Mg, Mo, Na, Nb, Nd, Os, Pd, Pr, Pt, Rh, Ru, Sm, Sn, Sr, Ta, Ti, V, W, Y, Zn, and Zr,
A' is at least one selected from the group consisting of C, Si, S, N, B, F, Cl, and I, and
0.5≤p≤1.5, 0≤x<1, 0≤y<1, 0≤z<1, and 0<w≤4.

10. A positive electrode comprising the positive electrode active material of claim 9.

11. A lithium secondary battery using the positive electrode of claim 10.
